# EUROPEAN PATENT APPLICATION

(11) **EP 4 549 614 A1**
(43) Date of publication of application: **07.05.2025**
(21) Application number: 23830610.4
(22) Date of filing: 28.06.2023
(51) Int. Cl.: C23C 28/00, A47J 27/00, A47J 36/02, A47J 36/04, C23C 4/06, C23C 4/131, C23C 24/04, C23C 26/00, C23C 4/02, C23C 4/18, C23C 24/08, C23C 28/04

(54) **COMPOSITE MAGNETICALLY PERMEABLE LAYER FOR POT, PREPARATION METHOD THEREFOR, AND POT**

(30) Priority: 29.06.2022 CN 202210762042
(71) Applicant: Wuhan Supor Cookware Co., Ltd., Wuhan, Hubei 430051 (CN)
(72) Inventor: QU, Yisheng, Wuhan, Hubei 430051 (CN); LI, Chao, Wuhan, Hubei 430051 (CN); YUAN, Huating, Wuhan, Hubei 430051 (CN); ZHANG, Ming, Wuhan, Hubei 430051 (CN)
(74) Representative: LLR
(86) International application number: PCT/IB2023/056653
(87) International publication number: WO 2024/003760

(57) **Abstract**

A composite magnetic conductive layer for cookware, comprising: a magnetic conductive layer, comprising a magnetic conductive material consisting of a rare earth oxide and a high-entropy alloy; and an auxiliary heat preservation layer, arranged on the magnetic conductive layer and formed from iron, aluminum, iron oxide and aluminum oxide. Also provided are a preparation method for the composite magnetic conductive layer, and cookware comprising the composite magnetic conductive layer.

## Description

### Field of the Invention

The present invention relates to the field of cookware, and more specifically, to a composite magnetic conductive layer for cookware, a preparation method of the composite magnetic conductive layer, and cookware comprising the composite magnetic conductive layer.

### Background of the Invention

The general compatibility of existing cookware products (except iron pots) with induction cooker is generally achieved by adding a magnetic conductive material to their outer surface. Specifically, the following technical solutions may be adopted: (1) adding a cold-riveted stainless steel composite bottom sheet to the outer surface of a compatible cookware product; (2) preparing the body of a compatible cookware product in a composite material of stainless steel or iron; (3) hot-spraying a composite material of stainless steel or iron on the outer bottom surface of a compatible cookware product. The above methods have the advantages of fast heating, convenience and cleanliness. But the disadvantage is uneven heat conduction at the bottom, resulting in a high local temperature and making it easy to burn the bottom, or even cause the bottom of the cookware to deform and become scrapped due to dry burning.

### Summary of the Invention

An object of the present invention is to provide a composite magnetic conductive layer. The Curie temperature of the composite magnetic conductive layer is adjustable, and the resistivity is low after it becomes paramagnetic, so as to be continuously heated at low power.

Another object of the present invention is to provide a preparation method for the composite magnetic conductive layer.

Yet another object of the present invention is to provide a cookware product comprising the composite magnetic conductive layer.

According to one aspect of the present invention, a composite magnetic conductive layer for cookware is provided, the composite magnetic conductive layer comprising: a magnetic conductive layer comprising a magnetic conductive material consisting of a rare earth oxide and a high-entropy alloy; and, an auxiliary heat preservation layer arranged on the magnetic conductive layer and formed from iron, aluminum, iron oxide and aluminum oxide. The high-entropy alloy significantly reduces the Curie temperature of the alloy, and the rare earth oxide allows to further reduce the Curie temperature of the high-entropy alloy. When the heating temperature reaches the Curie temperature, the magnetic conductive layer operates at a low power, thereby preventing the dry burning or other problems that may occur when the temperature of the conductive layer continues to rise and eventually becomes too high during use. The auxiliary heat preservation layer serves to keep the heating at a low power level and prevents the induction cooker from stopping heating due to not sensing the cookware.

In an embodiment of the present invention, the composite magnetic conductive layer may further comprise an organic anti-corrosion layer arranged on the auxiliary heat preservation layer. The organic anti-corrosion layer can protect the composite magnetic conductive layer from being corroded.

In an embodiment of the present invention, in the auxiliary heat preservation layer, based on the total weight of the auxiliary heat preservation layer, the weight content of aluminum may be 20wt%-35wt%, the weight content of iron oxide may be 2wt%-5wt%, the weight content of aluminum oxide may be 0.5wt%-1.2wt%, and the balance is iron. The auxiliary heat preservation layer serves to keep the heating at a low power because of its high oxide content, high porosity, high resistance, weak ferromagnetism and poor magnetic focusing effect, thereby preventing the induction cooker from stopping heating due to not sensing the cookware.

In an embodiment of the present invention, the high-entropy alloy may comprise at least four of Mg, Al, Ti, V, Cr, Mn, Fe, Co, Ni, Cu, Zn, Zr, Nb, Mo, Sn, Hf, Ta, W, Pb, Si and B, and may comprise at least one or more of Fe, Co, and Ni, and the rare earth oxide may comprise an oxide of at least one of lanthanides, Sc and Y. The high-entropy alloy will significantly reduce the Curie temperature of the alloy, and the rare earth oxide allows to further adjust the Curie temperature of the high-entropy alloy.

In an embodiment of the present invention, based on the total amount of substance of the high-entropy alloy and the rare earth oxide being 100%, the amount of substance of the high-entropy alloy may be 80%-95%, and the balance is the rare earth oxide. The magnetic conductive material comprising the high-entropy alloy and the rare earth oxide in the above content range can significantly reduce its Curie temperature.

In an embodiment of the present invention, the thickness of the auxiliary heat preservation layer may be 50 µm to150 µm.

According to another aspect of the present invention, a preparation method of a composite magnetic conductive layer is provided, the method comprising: providing a cookware substrate; cold spraying a magnetic conductive material consisting of a rare earth oxide and a high-entropy alloy on an outer bottom surface of the cookware substrate to form a magnetic conductive layer; and, arc spraying an aluminum-clad iron flux-core wire on the magnetic conductive layer to form an auxiliary heat preservation layer. The Curie temperature of the composite magnetic conductive layer prepared by the above method is adjustable and, after becoming paramagnetic, the layer has a low resistivity so as to be continuously heated at a low power.

In an embodiment of the present invention, the method may further comprise air spraying an organic silicon heat-resistant paint on the auxiliary heat preservation layer and sintering the paint to form an organic anti-corrosion layer.

In an embodiment of the present invention, process parameters for forming the auxiliary heat preservation layer may be: the diameter of the aluminum-clad iron flux core wire being 0.8 to 1.5 mm, the working gas being air, the voltage being 30 to 45 V, the current being 180 to 220 A, the spraying distance being 120 to180 mm, and the air atomization pressure being 0.3 to 0.6 MPa. Arc spraying is easy to operate and has high spraying efficiency. The auxiliary heat preservation layer prepared by this process can have high bonding strength and excellent coating performances.

In an embodiment of the present invention, process parameters for forming the magnetic conductive layer may be: the particle size of the magnetic conductive material being 1 to 50 µm, the working gas being high-purity nitrogen, the working temperature being 650 to 800°C, the spraying pressure being 1.5 to 2.5 MPa, the powder feeding speed being 5 to 10 Kg/h, and the spraying distance being 25 to 50 mm. Cold spraying is easy to operate and has high spraying efficiency. The magnetic conductive layer prepared by this process has good coating density.

In an embodiment of the present invention, process parameters for forming the organic anti-corrosion layer may be: the caliber of the air spray gun being 0.9 to 1.3 mm, the atomization pressure being 0.2 to 0.3 MPa, the sintering temperature being 250 to 300°C., and the sintering duration being 5 to 8 min. Air spraying is easy to operate and has high coating efficiency and good coating quality. The organic anti-corrosion layer prepared by this process has high uniformity.

According to another aspect of the present invention, a cookware is provided. The cookware comprises a body and a composite magnetic conductive layer formed on an outer bottom surface of the body, wherein the composite magnetic conductive layer comprises a magnetic conductive layer and an auxiliary heat preservation layer applied on the magnetic conductive layer. The composite magnetic conductive layer of the cookware has a low Curie temperature, so that when the heating temperature reaches the Curie temperature, the cookware operates at a low power, thereby preventing the dry burning or other problems that may occur when the temperature of the cookware continues to rise during use. In addition, the composite magnetic conductive layer of the cookware has a low resistivity after becoming paramagnetic, so that it may be continuously heated at a low power, thereby preventing the induction cooker from stopping heating due to not sensing the cookware.

The Curie temperature of the composite magnetic conductive layer of the present invention is reduced thanks to the magnetic conductive layer. When the heating temperature reaches the Curie temperature, the magnetic conductive layer operates at a low power, thereby preventing the problem of dry burning of magnetic permeable products (such as cookware compatible with induction cooker) due to a continuously rising temperature during use.

The composite magnetic conductive layer of the present invention can be continuously heated at a low power thanks to the auxiliary heat preservation layer. The composite magnetic conductive layer has a low resistivity after becoming paramagnetic, thereby enabling continuous heating at low power and preventing the induction cooker from stopping heating due to not sensing the cookware.

### Description of the Drawings

The above and/or other features and aspects of the present invention will become clear and easily understood through the description of embodiments in conjunction with the accompanying drawings.

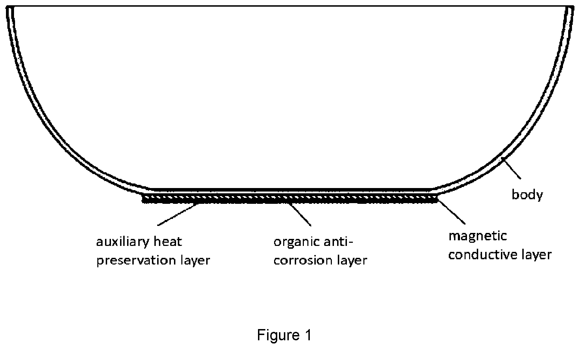

Figure 1 is a view showing a pot comprising a composite magnetic conductive layer according to an embodiment of the present invention.

### Detailed Description of the Invention

The present invention will now be more fully described below in conjunction with exemplary embodiments. However, the present invention can be implemented in a variety of different forms and should not be understood as being limited to the exemplary embodiments set forth herein. These embodiments are provided so that the disclosure of the present invention will be thorough and complete, and the scope of the present invention will be fully conveyed to those skilled in the art.

The present invention provides a composite magnetic conductive layer. The composite magnetic conductive layer comprises an auxiliary heat preservation layer formed from iron, aluminum, iron oxide and aluminum oxide, and a magnetic conductive layer comprising a magnetic conductive material consisting of a rare earth oxide and a high-entropy alloy. According to the present invention, the high-entropy alloy may have a significantly reduced Curie temperature, and the rare earth oxide can further reduce the Curie temperature of the high-entropy alloy. When the heating temperature reaches the Curie temperature, the magnetic conductive layer operates at low power, thereby preventing the magnetic conductive layer from dry burning or other problems that may occur when the temperature of the conductive layer continues to rise and eventually becomes too high during use. The auxiliary heat preservation layer allows to keep the heating at low-power and preventing the induction cooker from stopping heating due to not sensing the cookware.

Ferromagnetic materials have strong magnetism after being magnetized. However, this strong magnetism is related to temperature. As the temperature of ferromagnetic materials increases, the thermal motion of metal lattices intensifies, which will affect the ordered arrangement of magnetic domains. For the ferromagnetic material, when a certain temperature has not been reached, the thermal motion is not enough to destroy the parallel arrangement of magnetic domains. At this time, the average magnetic moment of any macroscopic area is still not zero, and the ferromagnetic material still has magnetism, but the average magnetic moment decreases with the increase of temperature. However, when the ferromagnetic material is heated to a certain temperature, magnetic domains will disintegrate due to violent thermal motion of molecules, the average magnetic moment will drop to zero, the magnetism of the ferromagnetic material will disappear, and the material will become a paramagnetic material. A series of ferromagnetic properties associated with magnetic domains (for example, high magnetic permeability, magnetostriction, etc.) all disappear, the hysteresis loop disappears and becomes a straight line, and the corresponding magnetic permeability of the ferromagnetic material is converted into the magnetic permeability of a paramagnetic material. The temperature at which ferromagnetism disappears is the Curie temperature.

The magnetic conductive layer for cookware of the present invention comprises a high-entropy alloy that can significantly reduce the Curie temperature of the alloy. The BCC phase and FCC phase of the high-entropy alloy can significantly reduce the Curie temperature of the alloy. When the magnetic conductive material comprising the high-entropy alloy is heated to the Curie point, the magnetic conductive material changes from ferromagnetic to paramagnetic, and thus stops generating heat on an induction cooker or has an extremely low heating power, so that the temperature of the cookware comprising the magnetic conductive material cannot continue to rise. When the temperature of the cookware decreases due to the paramagnetic nature of the magnetic conductive material, it is heated up again. Finally, the temperature of the cookware reaches a dynamic equilibrium around the Curie point, thereby making it possible to avoid dry burning and damage to the cookware (for example, deforming the cookware, discoloring, damage and failure of a non-stick coating, etc.) caused by an excessive temperature.

The rare earth oxide can further adjust the Curie temperature of the high-entropy alloy. The rare earth oxide is introduced into the high-entropy alloy to replace matrix atoms, thereby forming surface defects, which makes it possible to reduce the Curie temperature of the high-entropy alloy material.

The cost of the rare earth oxide is significantly lower than that of a rare earth metal. During solid phase sintering, the oxygen element of the rare earth oxide will be taken away by more active high-entropy alloy elements. As a result, rare earth elements will replace the high-entropy alloy elements, causing surface defects of the high-entropy alloy, thereby lowering the Curie temperature. Since the oxide components are not conductive, when mixed into the magnetic conductive material, they can further increase the resistance, so that the magnetic permeability will quickly disappear after the temperature reaches the Curie point, making it more responsive.

According to the induction heating principle, the induction cooker will automatically switch off if it cannot normally sense the cookware for longer than a certain limit. Therefore, it is necessary to keep a certain (for example, low) resistivity of the composite magnetic conductive layer after it becomes paramagnetic, so that the induction cooker can maintain continuous heating at low power (below 600W) to achieve a temperature balance.

According to an embodiment of the present invention, the composite magnetic conductive layer may comprise a magnetic conductive layer and an auxiliary heat preservation layer arranged on the magnetic conductive layer. The composite magnetic conductive layer may further comprise an organic anti-corrosion layer arranged on the auxiliary heat preservation layer.

The organic anti-corrosion layer may comprise a conventional organic silicon heat-resistant paint, etc. The organic anti-corrosion layer may protect the composite magnetic conductive layer from being corroded.

The auxiliary heat preservation layer may comprise iron, aluminum, iron oxide and aluminum oxide. Based on the total weight of the auxiliary heat preservation layer, the weight content of aluminum may be 20wt%-35wt%, for example, 25wt%-35wt% or 30wt%-35wt%, the weight content of iron oxide may be 2wt%-5wt%, for example, 2wt%-4wt% or 2wt%-3wt%, the weight content of aluminum oxide v be 0.5wt%-1.2wt%, for example, 0.6wt%-1.1wt%, 0.7wt%-1.0wt% or 0.8wt%-0.9wt%, and the balance is iron.

If the content of oxides is too low, the magnetic permeability is high. In this case, the auxiliary heat preservation layer only has a heating function but not an auxiliary heat preservation function. If the content of oxides is too high, the electrical resistance is too high. In this case, the auxiliary heat preservation layer may not be magnetic conductive. When the contents of oxides are within the above ranges, the auxiliary heat preservation layer is magnetic conductive yet with a low heating power.

The thickness of the auxiliary heat preservation layer may be 50 µm to 150 µm, which is thinner than a normal iron magnetic conductive layer. If the thickness is less than 50 µm, the electrical resistance becomes high and the magnetic permeability cannot be achieved; if the thickness is greater than 150 µm, the cost is wasted, the stress is large, and there is a risk of peeling and cracking.

When the output power of the induction cooker is constant at 2,100 W, the actual heating power of the cookware is related to the magnetic flux received by the composite magnetic conductive layer. The auxiliary heat preservation layer receives less magnetic flux due to its high oxide content, high porosity, high resistance, weak ferromagnetism, and poor magnetic concentration effect. Therefore, it can be heated at low power. For example, the electromagnetic heating power may be only 300 to 600 W. Therefore, when the magnetic conductive layer does not work (that is, when the magnetic conductive layer becomes paramagnetic), the auxiliary heat preservation layer can be heated at a relatively low power and maintain an even temperature uniform to prevent the induction cooker from switching off.

The auxiliary heat preservation layer may be formed as a disc with a diameter of 8 to 13 cm or a disc with a mesh structure having holes formed by masking a fixture, and the actual magnetic permeable area of the auxiliary heat preservation layer being 60% to 80% of the area of the disc.

The magnetic conductive layer is used for electromagnetic heating, but will become a paramagnetic material after the temperature reaches the Curie point, so as to stop generating heat. The magnetic conductive layer may be consisted of a magnetic conductive material. The magnetic conductive material may comprise a high-entropy alloy and a rare earth oxide. The high-entropy alloy may comprise at least four of Mg, Al, Ti, V, Cr, Mn, Fe, Co, Ni, Cu, Zn, Zr, Nb, Mo, Sn, Hf, Ta, W, Pb, Si and B, and at least comprises one or more of Fe, Co and Ni. The rare earth oxide may comprise an oxide of at least one of lanthanides, scandium (Sc) and yttrium (Y), which have chemical properties similar to those of lanthanides.

Examples of the high-entropy alloy may comprise AlCrFeCoNi, AlCrFeTiNi, AlCrFeCoNiCu, AlCrFeMnNi, FeNiAlCr, Al2CrFe3CoNiCu, AlCr1.5Fe3MnNi, FeNiAl2Cr, etc. The high-entropy alloy may be used alone or in combination in any ratio.

Lanthanides may include the 15 elements with atomic numbers 57 to 71 in the periodic table, namely, lanthanum (La), cerium (Ce), praseodymium (Pr), neodymium (Nd), promethium (Pm), samarium (Sm), europium (Eu), gadolinium (Gd), terbium (Td), dysprosium (Dy), holmium (H0), erbium (Er), thulium (Tm), ytterbium (Yb) and lutetium (Lu).

Examples of the rare earth oxide may comprise yttrium oxide, lanthanum oxide, scandium oxide, europium oxide, etc. The rare earth oxide may be used alone or in combination in any ratio.

According to an embodiment of the present invention, based on the total amount of substance of the high-entropy alloy and the rare earth oxide being 100%, the amount of substance of the high-entropy alloy may be 80% to 95%, for example, 80% to 90%, 80% to 95%, preferably 80% or 90%, and the balance is the rare earth oxide. Too high a rare earth oxide content will increase the electrical resistance of the magnetic conductive material, weaken the electrical conductivity of the magnetic conductive layer, and ultimately cause it to fail to induct and conduct magnetism. If the content of the high-entropy alloy is too high, the role of the rare earth oxide in lowering the Curie temperature point cannot be assured.

According to an embodiment of the present invention, in the high-entropy alloy, based on the total atomic number of the high-entropy alloy, the atomic number of each element in the high-entropy alloy may be 5at% (atomic fraction) to 35at%, for example, 5at% to 30at%, 5at% to 25at%, 5at% to 20at%, 5at% to 15at%, or 5at% to 10at%, and the total atomic number of Fe, Co and Ni may be 35at% to 95at%, for example, 40at% to 80at%, 45at% to 75at%, 50at% to 70at%, 55at% to 65at%, or 60at% to 65at%.

The preparation method of a composite magnetic conductive layer for cookware according to the present invention will be described below.

The preparation method of a composite magnetic conductive layer comprises: providing a cookware substrate; cold spraying a magnetic conductive material consisting of a rare earth oxide and a high-entropy alloy on an outer bottom surface of the cookware substrate to form a magnetic conductive layer; and, arc spraying an aluminum-clad iron flux core wire on the magnetic conductive layer to form an auxiliary heat preservation layer, thus completing the preparation of the composite magnetic conductive layer. The method may further comprise air spraying an organic silicon heat-resistant paint on the auxiliary heat preservation layer and sintering the paint to form an organic anti-corrosion layer.

In the step of forming the magnetic conductive layer, the magnetic conductive material may be cold sprayed to form the magnetic conductive layer. Process parameters for forming the magnetic conductive layer may be: the particle size of the magnetic conductive material being 1 to 50 µm, the working gas being high-purity nitrogen, the working temperature being 650 to 800°C, the spraying pressure being 1.5 to 2.5 MPa, the powder feeding speed being 5 to 10 Kg/h, and the spraying distance being 25 to 50 mm. Under the above process parameters, high-pressure gas flow formed at the nozzle accelerates magnetic conductive material powder, and deposits it on the surface of the substrate, thereby forming a magnetic conductive layer.

In the step of forming the auxiliary heat preservation layer, the auxiliary heat preservation layer is formed by arc spraying an aluminum-clad iron flux core wire (the core is iron powder) in the air. Specifically, during the arc spraying, part of the iron and part of the aluminum of the aluminum-clad iron flux core wire are oxidized by oxygen in the air to form iron oxide and aluminum oxide. Therefore, the auxiliary heat preservation layer finally formed is a mixed coating of melted iron, aluminum, iron oxide and aluminum oxide.

Process parameters for forming the auxiliary heat preservation layer may be: the diameter of the aluminum-clad iron (i.e., aluminum-clad iron powder) flux core wire being 0.8 to 1.5mm, the working gas being air, the voltage being 30 to 45V, the current being 180 to 220A, the spraying distance being 120 to 180mm, and the air atomization pressure being 0.3 to 0.6 MPa. Under the above process parameters, molten droplets are dispersed by the high-speed air at the nozzle and accelerated to be deposited on a substrate surface to form an auxiliary heat preservation layer.

The content of oxides in the auxiliary heat preservation layer may be controlled by the diameter and the relative content of aluminum skin and iron powder of the wire, the air pressure, the voltage, the current in the arc spraying process, etc.

In the step of forming the organic anti-corrosion layer, an air spray gun may be used to spray the organic silicon heat-resistant paint. Process parameters for forming the organic anti-corrosion layer may be: the caliber of the air spray gun being 0.9 to 1.3 mm (e.g., 1.2 mm), the atomization pressure being 0.2 to 0.3 MPa (e.g., 0.25 MPa), the sintering temperature being 250 to 300°C. (e.g., 280°C.), and the sintering duration being 5 to 8 min.

A pot according to an embodiment of the present invention will be described below in reference to the accompanying drawing.

Figure 1 is a view showing a pot comprising a composite magnetic conductive layer according to an embodiment of the present invention.

In reference to Figure 1, the pot may comprise a pot body and a composite magnetic conductive layer formed on an outer bottom surface of the pot body, wherein the composite magnetic conductive layer may comprise a magnetic conductive layer formed on an outer bottom surface of the pot bottom, an auxiliary heat preservation layer formed on the magnetic conductive layer, and an organic anti-corrosion layer formed on the auxiliary heat preservation layer. The composite magnetic conductive layer of the pot has a low Curie temperature, so that when the heating temperature reaches the Curie temperature, the pot operates at low power, thereby preventing the pot from being dry-burned due to a continuously rising temperature during use. In addition, after the composite magnetic conductive layer of the pot becomes paramagnetic, the auxiliary heat preservation layer in the composite magnetic conductive layer enables the pot to be heated at low power, keeps an even temperature of the pot, and prevents the induction cooker from stopping heating due to not sensing the pot. When the temperature of the pot drops below the Curie temperature, the composite magnetic conductive layer becomes from paramagnetic to ferromagnetic, so that the induction cooker can continue to heat the pot.

The preparation method of the magnetic conductive material of the present invention will be described in detail below with reference to examples.

### Embodiment 1

The pot according to Embodiment 1 is prepared by the following steps.

### 1. Preparing a Magnetic Conductive material

Two raw materials, high entropy alloy AlCrFeCoNi and lanthanum oxide, are ball milled in a ball mill at a molar ratio of 4:1. The whole process is carried out in a 99.999% argon atmosphere. The powder obtained by the ball milling has a particle size of +500 mesh, and is then kept at 120°C for 2 hours to be dried. Ball milling parameters may be: the ball milling medium being anhydrous ethanol; the speed being 300r/min, the ball-to-material ratio being 12:1, and the ball milling duration being 30h;
5% liquid paraffin by weight is added to the powder obtained by the ball milling, and the mixture is fully mixed and pressed, and then solid-phase sintered at 1, 100°C for 6h;
the magnetic conductive material blocks obtained by the solid-phase sintering are mechanically crushed and then sieved to obtain a magnetic conductive material with a particle size of 40 µm to 50 µm.

### 2. Spraying the Magnetic Conductive material

A pretreated cookware substrate (made of aluminum) is selected. A magnetic conductive material with an average particle size of 40 µm is selected and loaded respectively into a powder feeder. Process parameters of the spraying are: the working gas being high-purity nitrogen, the working temperature being 700°C, the spraying pressure being 2.0 MPa, the powder feeding speed being 9 Kg/h, and the spraying distance being 40 mm. Under the above process parameters, high-pressure gas flow formed at the nozzle accelerates the magnetic conductive material powder, and then deposits it on the surface of the substrate, thereby forming a magnetic conductive layer on the outer bottom surface of the substrate.

### 3. Arc Spraying aluminum-clad Iron Flux Core Wire

An aluminum-clad iron flux core wire is arc sprayed on the magnetic conductive layer to form an auxiliary heat preservation layer. Process parameters of arc spraying are: the diameter of the aluminum-clad iron flux core wire being 1.2 mm, the working gas being air, the voltage being 30 V, the current being 220 A, the spraying distance being 120 mm, and the air atomization pressure being 0.6 MPa. Under the above parameters, high-speed air at the nozzle disperses molten droplets and accelerates their deposition on the surface of the magnetic conductive layer to form an auxiliary heat preservation layer. By testing, in the auxiliary heat preservation layer, the weight content of aluminum is 30wt%, the weight content of iron oxide is 4wt%, the weight content of aluminum oxide is 0.9wt%, and the weight content of iron is 65.1wt%.

### 4. Air Spraying Organic Heat-Resistant Paint

An organic heat-resistant paint is air sprayed on the auxiliary heat preservation layer by an air spray gun to form an organic anti-corrosion layer. Process parameters of air spraying are as follows: the caliber of the air spray gun being 1.2 mm, and the atomization pressure being 0.25 MPa. Then, the pot body is placed in a high temperature tunnel and sintered at 280°C for 5 min to form the organic anti-corrosion layer.

Manufacture of the pot of Embodiment 1 is completed through the above steps.

### Embodiment 2

The pot of Embodiment 2 is manufactured by the same method as that of Embodiment 1, except that the molar ratio of the two raw materials, the high entropy alloy AlCrFeCoNi and lanthanum oxide, is 9:1.

### Embodiment 3

The pot of Embodiment 3 is manufactured by the same method as that of Embodiment 1, except that AlCrFeCoNi is replaced by FeNiAl2Cr.

### Embodiment 4

The pot of Embodiment 4 is manufactured by the same method as that of Embodiment 1, except that lanthanum oxide is replaced by yttrium oxide.

### Embodiment 5

The pot of Embodiment 5 is manufactured by the same method as that of Embodiment 1, except that lanthanum oxide is replaced by a mixture of lanthanum oxide and yttrium oxide (with molar ratio of lanthanum oxide to yttrium oxide being 1:1).

### Comparison 1

The pot of Comparison 1 is manufactured by the same method as that of Embodiment 1, except that only AlCrFeCoNi powder is used as the magnetic conductive material.

### Comparison 2

The pot of Comparison 2 is obtained by attaching a conventional cold-riveted stainless steel magnetic conductive sheet to the outer bottom surface of the cookware substrate.

### Comparison 3

The pot of Comparison 3 is manufactured by the same method as that of Embodiment 1, except that the organic heat-resistant paint is directly sprayed on the magnetic conductive layer and the step of arc spraying the aluminum-clad iron flux core wire is omitted.

### Comparison 4

The pot of Comparison 4 is manufactured by the same method as that of Embodiment 1, except that the voltage is 20 V and the current is 150 A during arc spraying the aluminum-clad iron flux core wire. By testing, in the formed auxiliary heat preservation layer, the weight content of aluminum is 32wt%, the weight content of iron oxide is 1.5wt%, the weight content of aluminum oxide is 0.3wt%, and the weight content of iron is 66.2wt%.

### Testing of Performance Indicators

The pots obtained above are subjected to performance testing, and the test results are recorded in Table 1 below. The specific performance testing method is as follows:
Magnetic permeability power testing method: the standard induction cooker test according to household induction cooker compatible pot GB_T 32147-2015 is used;
Curie temperature testing: the pots are dry burnt on a household induction cooker at 2,100W, and the maximum temperature of the inner surface when the induction cooker stops heating is measured.

The initial power is the maximum output power a new product can achieve when it is used for the first time.

**Table 1**

| | Initial Power/W | maximum Temperature/°C | Continuous Heating Duration/h |
|---|---|---|---|
| Embodiment 1 | 1,680 | 160 | 2 |
| Embodiment 2 | 1,850 | 201 | 2 |
| Embodiment 3 | 1,700 | 155 | 2 |
| Embodiment 4 | 1,650 | 160 | 2 |
| Embodiment 5 | 1,720 | 160 | 2 |
| Comparison 1 | 1,900 | 284 | 2 |
| Comparison 2 | 1,900 | 455 | 2 |
| Comparison 3 | 1,680 | 160 | 0.05 |
| Comparison 4 | 1,850 | 240 | 2 |

It can be seen from Embodiments 1 to 5 of the present invention that a pot comprising the composite magnetic conductive layer according to the present invention has a low maximum temperature of the inner surface when the induction cooker stops heating. Therefore, the pot can be effectively prevented from being dry burned due to inadvertence of a user during use. In addition, the pot comprising the composite magnetic conductive layer according to the present invention may be continuously heated at low power, thereby preventing the induction cooker from stopping heating due to not sensing the pot.

Although the present invention has been specifically shown and described with reference to exemplary embodiments of the present invention, those skilled in the art will understand that various changes in form and detail may be made thereto without departing from the spirit and scope of the present invention as defined by the claims and their equivalents. The embodiments should be considered in a descriptive sense only and not for the purpose of limitation. Therefore, the scope of the present invention is not limited by the specific modes of realization of the present invention, but by the claims, and all differences within the scope will be interpreted as included in the present invention.

## Claims

1. A composite magnetic conductive layer for cookware, **characterized in that**, the composite magnetic conductive layer comprises:
- a magnetic conductive layer comprising a magnetic conductive material consisting of a rare earth oxide and a high-entropy alloy; and,
- an auxiliary heat preservation layer arranged on the magnetic conductive layer and formed from iron, aluminum, iron oxide and aluminum oxide.

2. The composite magnetic conductive layer according to claim 1, **characterized in that**, the composite magnetic conductive layer further comprises an organic anti-corrosion layer arranged on the auxiliary heat preservation layer.

3. The composite magnetic conductive layer according to claim 1, **characterized in that**, based on the total weight of the auxiliary heat preservation layer, the weight content of aluminum is 20wt%-35wt%, the weight content of iron oxide is 2wt%-5wt%, the weight content of aluminum oxide is 0.5wt%-1.2wt%, and the balance is iron.

4. The composite magnetic conductive layer according to claim 1, **characterized in that**:
- the high-entropy alloy comprises at least four of Mg, Al, Ti, V, Cr, Mn, Fe, Co, Ni, Cu, Zn, Zr, Nb, Mo, Sn, Hf, Ta, W, Pb, Si and B, and at least one or more of Fe, Co, and Ni; and,
- the rare earth oxide comprises an oxide of at least one of lanthanides, Sc and Y.

5. The composite magnetic conductive layer according to claim 4, **characterized in that**, based on the total amount of substance of the high-entropy alloy and the rare earth oxide being 100%, the amount of substance of the high-entropy alloy is 80%-95%, and the balance is the rare earth oxide.

6. The composite magnetic conductive layer according to claim 1, **characterized in that**, the thickness of the auxiliary heat preservation layer is 50 µm to 150 µm.

7. A preparation method of a composite magnetic conductive layer, **characterized in that**, the method comprising the following steps:
- providing a cookware substrate;
- cold spraying a magnetic conductive material consisting of a rare earth oxide and a high-entropy alloy on an outer bottom surface of the cookware substrate to form a magnetic conductive layer; and,
- arc spraying an aluminum-clad iron flux core wire on the magnetic conductive layer to form an auxiliary heat preservation layer.

8. The method according to claim 7, **characterized in that**, the method further comprises air spraying an organic silicon heat-resistant paint on the auxiliary heat preservation layer and sintering the paint to form an organic anti-corrosion layer.

9. The method according to claim 7, **characterized in that**, process parameters for forming the auxiliary heat preservation layer are: the diameter of the aluminum-clad iron flux core wire being 0.8 to 1.5 mm, the working gas being air, the voltage being 30 to 45 V, the current being 180 to 220 A, the spraying distance being 120 to 180 mm, and the air atomization pressure being 0.3 to 0.6 MPa.

10. The method according to claim 7, **characterized in that**, process parameters for forming the magnetic conductive layer are: the particle size of the magnetic conductive material being 1 to 50 µm, the working gas being high-purity nitrogen, the working temperature being 650 to 800°C, the spraying pressure being 1.5 to 2.5 MPa, the powder feeding speed being 5 to 10 Kg/h, and the spraying distance being 25 to 50 mm.

11. The method according to claim 8, **characterized in that**, process parameters for forming the organic anti-corrosion layer are: the caliber of the air spray gun being 0.9 to 1.3 mm, the atomization pressure being 0.2 to 0.3 MPa, the sintering temperature being 250 to 300°C, and the sintering duration being 5 to 8 min.

12. Cookware, **characterized in that**, the cookware comprises a body and the composite magnetic conductive layer according to any one of claims 1 to 6, the composite magnetic conductive layer being formed on an outer bottom surface of the body.
